# EUROPEAN PATENT APPLICATION

(11) **EP 3 808 643 A1**
(43) Date of publication of application: **21.04.2021**
(21) Application number: 20199719.4
(22) Date of filing: 01.10.2020
(51) Int. Cl.: B62M 1/26, B62K 3/00

(54) **PEDALLING MECHANISM FOR BICYCLES AND SIMILAR ONES, WITH AN ECCENTRIC SHAPE TRAJECTORY DRAWN BY THE PEDAL AXES AND VARIABLE SPEED**

(30) Priority: 16.10.2019 IT 201900014040
(71) Applicant: Improta, Armando, 80129 Napoli (IT)
(72) Inventor: Costanzo, Immacolata, 35650 El Roque (ES); Musti, Salvatore, 80056 Ercolano (IT); Improta, Armando, 80129 Napoli (IT)

## Description

**Introduction** - the object of this patent application allows to easily overcome the difficulties that nowadays cyclists have in overcoming that part of the circular trajectory drawn by the pedal axes closer to the saddle and which is drawn with a bold line from point 1 to point 2 in the attached table 1. The object of this patent application easily overcomes the above mentioned difficulties by an eccentric shape trajectory at variable speed drawn by the pedal axes as is shown with G in the attached table 2.

**AT THE CURRENT STATE OF THE ART** on bicycles and similar ones, is universally used the well-known pedalling mechanism: in table 1 is shown the profile of a common bicycle; with A and B are indicated the pedal cranks that are connected to the crank puller indicated with C to which a chain-rings, indicated with D, is fixed and which in turn is connected to the pinion, indicated with E, by means of a chain indicated with F.

To the pedal crank heads indicated with G and H are fixed the pedals indicated with P and P1 on which the cyclist works; it follows that the pedal shafts, which on the above-mentioned table 1 coincide with the pedal crank heads, draw a circular trajectory indicated with O. This pedalling system causes to the cyclist considerable difficulties, especially uphill, when the inertial thrust decreases.

**REAL DESCRIPTION** of the pedalling system for bicycles and similar ones, object of the present patent application.
For ease of exposure we will refer to only one side of a common bicycle
Table 2 shows a way to implement the object of the present patent application characterized by the eccentric shape trajectory drawn by the pedal axes, indicated with G. This trajectory is achieved through the insertion, in the current pedalling mechanism used mainly on bicycles and similar ones, of a rigid rod, a slide guide and a slider, as described below:
the pedal (indicated with E) is fixed, in the way used today to fix the pedals to the crank heads, at the end D of the rigid rod A. The head of the pedal crank 5 is hinged in an intermediate point C of the rigid rod A. The pin H is fixed to the other end of the rigid rod A. On the above-mentioned pin H are fitted one or more ball bearings N. The pin H is fixed to the rigid rod A perpendicularly to the plan on which lies the trajectory drawn by the rotation of the head of the pedal crank. The pin H acts as a slider that runs along the slide guide B of appropriate size. The slide guide B is fixed to the bicycle frame on a plan parallel to the plan on which lies the frame itself.
By activating the pedal, it follows that:
1) the head of the pedal crank will rotate with a circular trajectory;
2) the slider will run along the slide guide with rectilinear motion like "comes and goes";
3) the pedal axis will draw an eccentric trajectory of desired shape and size depending on the extension of the rod over the head of the pedal crank.

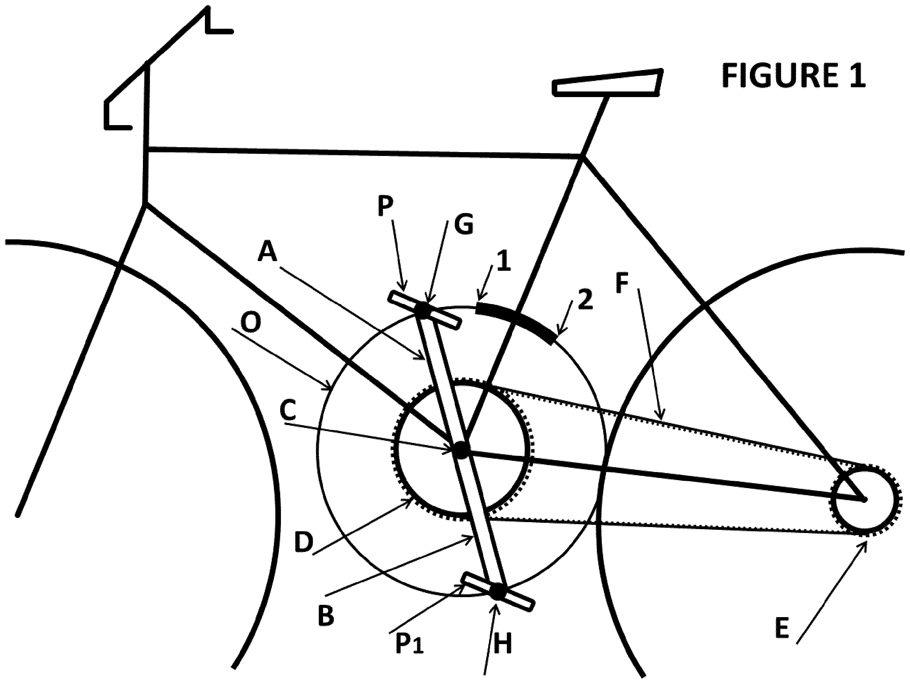

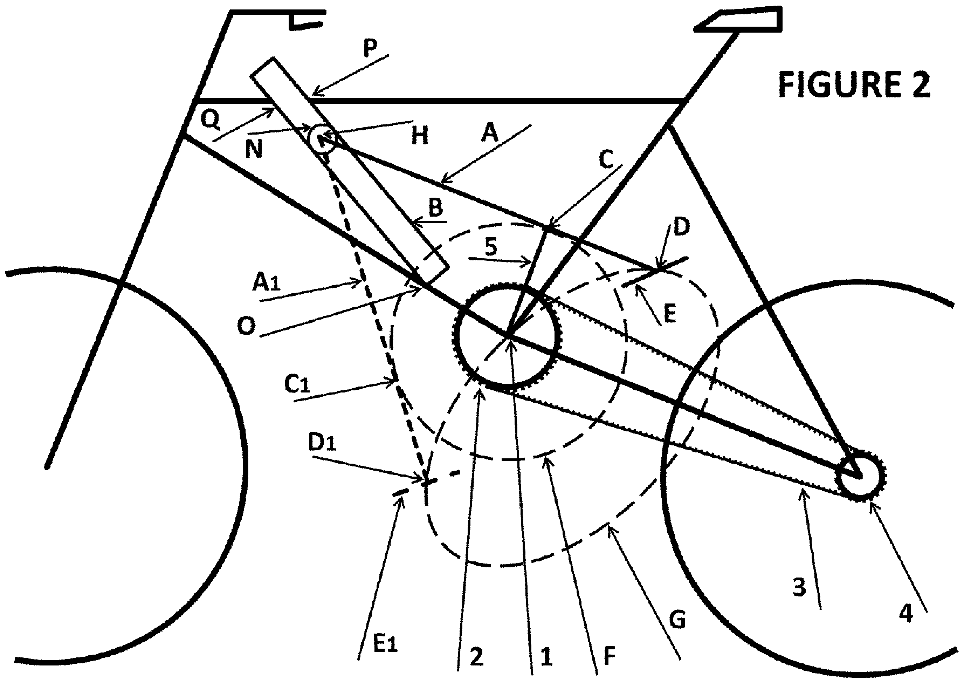

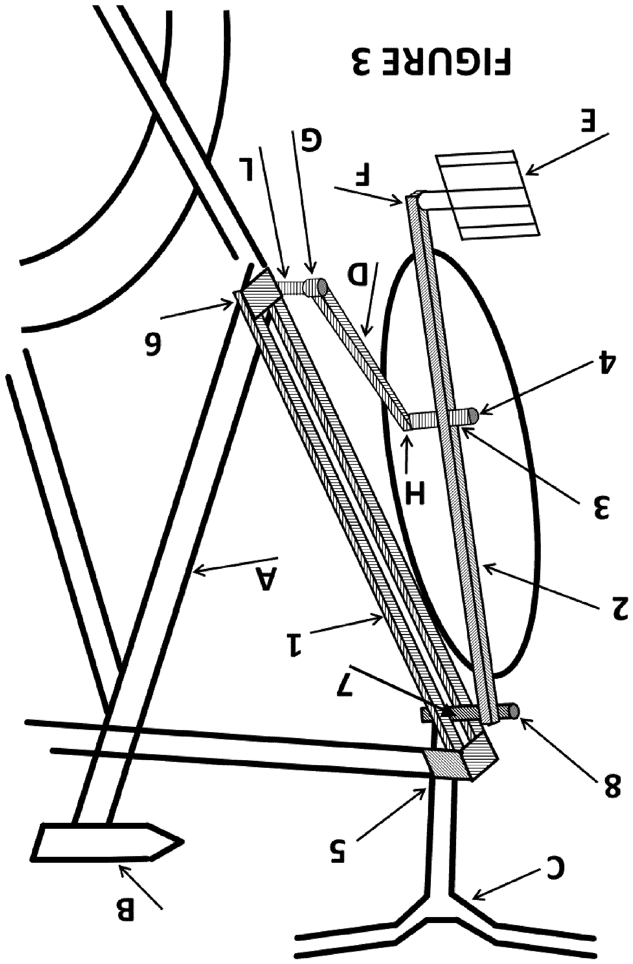

## Claims

1. A pedalling mechanism put in the current pedalling mechanism used mainly on bicycles and similar ones, which is composed by:
• a rigid rod indicated with A;
• a slide guide indicated with B;
• a slider (composed by a pin H on which are fitted some ball bearings N).
The pedal (indicated with E) is fixed, in the way used today to fix the pedals to the crank heads, at the end D of the rigid rod (A).
The rigid rod (A), in one of its intermediate points indicated with C, is hinged at the head of the pedal crank (the pedal crank is indicated with 5) in the way that its major axle lies on a plane parallel to the plane on which lies the rotation plan drawn by the head of the pedal crank.
The slide guide B is fixed to the frame in the way that its major axes lie on a plan parallel to the plan on which lies the rigid rod (A) during the motion.
The slider is fixed at the other end of the rigid rod (A). The axis of the slider is fixed perpendicularly to the plan on which lies the rotation plan drawn by the head of the pedal crank.
By activating the pedal, it follows that:
the slider will run along the slide guide with rectilinear motion like "comes and goes";
the head of the pedal crank will rotate with a circular trajectory;
the pedal axis will draw an eccentric trajectory at variable speed.

2. With reference to the claim (1), it is claimed that the rigid rod can be made of any material (for example steel, carbon, titanium, aluminium, various alloys etc.) and can have variable shape and size without invalidating the principle that characterizes the discovery, object of this patent application.

3. With reference to the claim (1) and (2), it is claimed that the object of this patent application can be applied to bicycles and similar ones, but can also be applied to any pedal or crank systems, for example a pedal power supply.
